# EUROPEAN PATENT APPLICATION

(11) **EP 1 870 819 A1**
(43) Date of publication of application: **26.12.2007**
(21) Application number: 07104428.3
(22) Date of filing: 19.03.2007
(51) Int. Cl.: G06F 13/38

(54) **Method and system of connecting between a single wireless device and plurality of hosts using a wireless USB**

(30) Priority: 22.06.2006 KR 20060056542
(71) Applicant: SAMSUNG ELECTRONICS CO., LTD., Suwon-si, Gyeonggi-Do 442-742 (KR)
(72) Inventor: YUN, Tae-jung, Seoul (KR)
(74) Representative: Perkins, Dawn Elizabeth

(57) **Abstract**

A method and system to wirelessly connect between a single device and plurality of hosts using a universal serial bus (USB). A plurality of virtual devices are set and stored in the single device, and connection between the plurality of virtual devices and the plurality of hosts is maintained, thereby improving the efficiency and convenience of use of the single device. Thus, multiple hosts attempting to wirelessly communicate or transfer data to a single device may now do so without having to individually connect/disconnect each non-accessing host from the single device.

## Description

The present invention relates to a method and system of connecting between a single device and a plurality of hosts, and more particularly, to a method and system of connecting a single device and a plurality of hosts using a wireless universal serial bus (USB), in which a plurality of virtual devices are set and stored in the single device and connection between the plurality of virtual devices and the plurality of hosts are maintained, thereby enhancing the efficiency and convenience of use of the single device.

As well known to one skilled in the art, recently personal area network (PAN) technologies have been shifting from wired technology to wireless technology. Since the shift from wired to wireless technology is in progress, existing universal serial bus (USB) technology has become redefined as a wireless USB using ultra wideband (UWB). The UWB-based wireless USB technology retains the maximum speed of 480 Mbps, which is one of the benefits of the existing USB 2.0 model, and enforces the current infrastructure so as to provide users with the same ease of use as the existing USB 2.0 model. However, as wireless USB attempts to meet the specifications of the existing USB 2.0 model, some beneficial aspects of the wireless technology are so overlooked that the ease of use could fail to be provided to users. Existing wireless USB technology is well described in U.S. Patent No. 5,890,015, the contents of which are incorporated herein.

The topology used for a wireless USB is a hub and spoke model that is well known to one skilled in the art. According to the hub and spoke model, a host acts as a hub in the center of a network which may contain individual devices, whereas such devices can be printers, which act as spokes at the end of the network. Each of the spokes establishes a point-to-point connection between the host and the device. The host can be connected with up to 127 wireless devices, which is possible because physical ports are not necessary.

The above topology does not consider the case where a single wireless device is connected to a plurality of hosts. Specifically, since the topology used for the existing wireless USB is not designed for the plurality of hosts sharing a particular wireless device, users can experience difficulties in attempting to share a particular wireless device with the plurality of hosts. For example, in a case where several computers use a single printer, a user may wish to connect and disconnect between the wireless device and the printer effortlessly, much akin to newly connecting a cable to a wired USB printer.

U.S. Laid-open Publication No. 2005-0027918 discloses a method of wireless connecting between slave adapters connected to individual hosts and master adapters or splitters connected to peripheral devices. Here, the master adapters or splitters detect the slave adapters and establish a wireless connection with the slave adapters in an inquiry mode. Their mode then changes automatically into an operational mode, and the master adapters perform communication according to a wireless protocol, and then after completing the operation in the operational mode, the master adapters disconnect from the slave adapters.

However, the above method employs adapters or splitters that result in additional hardware devices for wireless connection between the plurality of hosts and peripheral devices, thereby having a complicated structure and consequently incurring additional costs.

The present invention provides a method of connecting between a single device and a plurality of hosts using a wireless universal serial bus (USB), in which a plurality of virtual devices are set and stored in the single device and the connection between the plurality of virtual devices and the plurality of hosts are maintained, thereby improving efficiency and convenience of use of the single device.

The present invention also provides a system to connect between a single device and the plurality of hosts using a wireless universal serial bus (USB), in which a plurality of virtual devices are set and stored in the single device and connection between the plurality of virtual devices and the plurality of hosts are maintained, thereby improving efficiency and convenience of use of the single device.

Additional aspects and advantages of the present invention will be set forth in part in the description which follows and, in part, will be obvious from the description, or may be learned by practice of the invention.

The foregoing and/or other aspects of the present invention may be achieved by providing a method of connecting between a single device and multiple hosts using a wireless universal serial bus (WUSB), the method including setting and storing a plurality of virtual devices in the single device, and establishing a connection between the plurality of virtual devices and the plurality of hosts.

The method may further comprise one of the plurality of hosts using the single device while others of the plurality of virtual devices connect with the plurality of hosts.

Virtual device information blocks may be formed and stored in a storage portion of the single device to correspond to the plurality of virtual devices.

Each of the virtual device information blocks may include association information such as a connection host ID (CHID), and a connection device ID (CDID).

The association information may include priority information.

The association information may be provided by the plurality of hosts according to a defined association method, or a user may establish connection between the single device and an intended host to obtain the association information.

The establishing of the connection of the user may include checking a frame type of a media access control (MAC) header field by scanning a detectable beacon period using the single device.

The single device and the plurality of hosts may recognize each of the plurality of virtual devices as an individual real device.

A source of the single device that is shared by the plurality of hosts may be used by the hosts according to priority set by a user, and the host with the next priority waits while being connected with the corresponding virtual device until the host can take possession of the source.

According to another aspect of the present invention, there is provided a system for connecting between a single device and a plurality of hosts using a wireless USB, the system comprising: the single device including the plurality of virtual devices which are set therein and correspond to the plurality of hosts, wherein the plurality of virtual devices are implemented by device information blocks which store association information in the course of an association procedure in which connection context for authentication is exchanged between the single device and the plurality of hosts.

The foregoing and/or other aspects and utilities of the present invention are also achieved by providing a single device including a plurality of virtual devices respectively having device information blocks such that each one of the virtual devices is individually connected to a corresponding one of hosts according to the device information blocks.

The foregoing and/or other aspects and utilities of the present invention are also achieved by providing a single device including a plurality of virtual devices respectively having device information blocks such that the single device is connected to a plurality of hosts by selectively connecting each of the virtual devices to a corresponding one of the plurality of hosts according to one of a state and a job of the corresponding one of the plurality of hosts.

The foregoing and/or other aspects and utilities of the present invention are also achieved by providing a computer readable recording medium having embodied thereon a computer program to connect between a single device and a plurality of hosts using a wireless universal serial bus (WUSB), the method including setting and storing a plurality of virtual devices in a single device, and establishing a WUSB compatible connection between the plurality of virtual devices and a plurality of hosts.

These and/or other aspects and advantages of the present invention will become apparent and more readily appreciated from the following description of the embodiments, taken in conjunction with the accompanying drawings of which:
Figure 1 illustrates a configuration diagram illustrating a system to connect between a single device and a plurality of hosts using a wireless universal serial bus (USB) according to an embodiment of the present invention;
Figure 2 illustrates a flowchart illustrating a method of connecting between a single device and a plurality of hosts using a wireless USB according to an embodiment of the present invention;
Figures 3A - 3C are configuration diagrams illustrating hosts that are employed in the system illustrated in Figure 1;
Figures 4A - 4C are configuration diagrams illustrating devices that are employed in the system illustrated in Figure 1;
Figures 5 - 19 are diagrams illustrating operations in the system and method illustrated in Figures 1 and 2; and
Figures 20 - 22 are flowcharts illustrating operations of the system and method illustrated in Figures 1 and 2.

Reference will now be made in detail to the embodiments of the present invention, examples of which are illustrated in the accompanying drawings, wherein like reference numerals refer to the like elements throughout. The embodiments are described below in order to explain the present invention by referring to the figures.

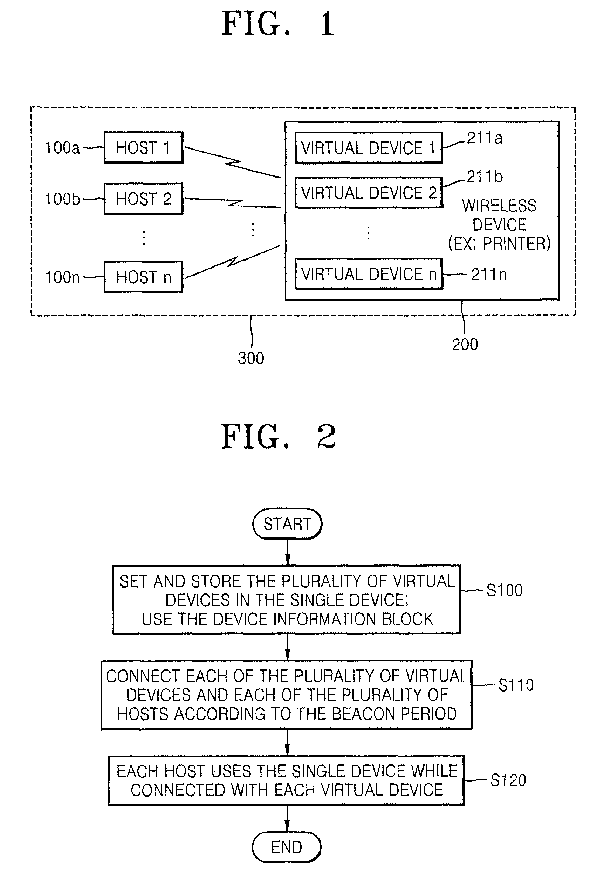

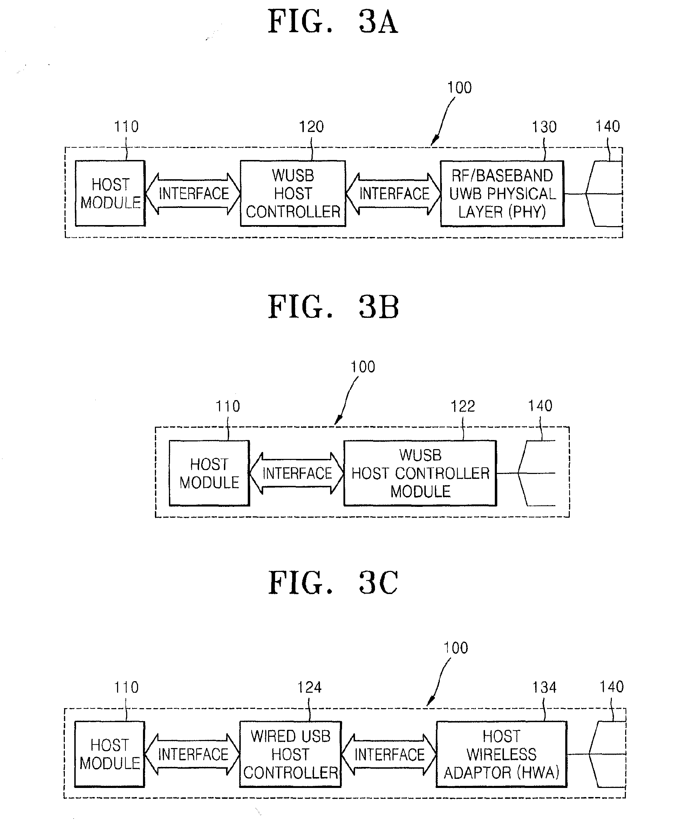

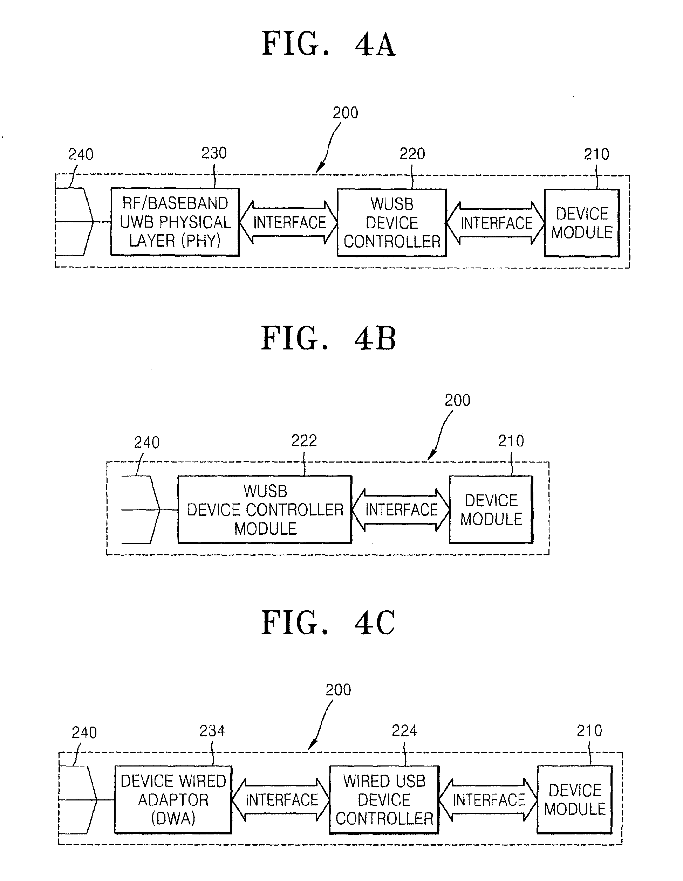

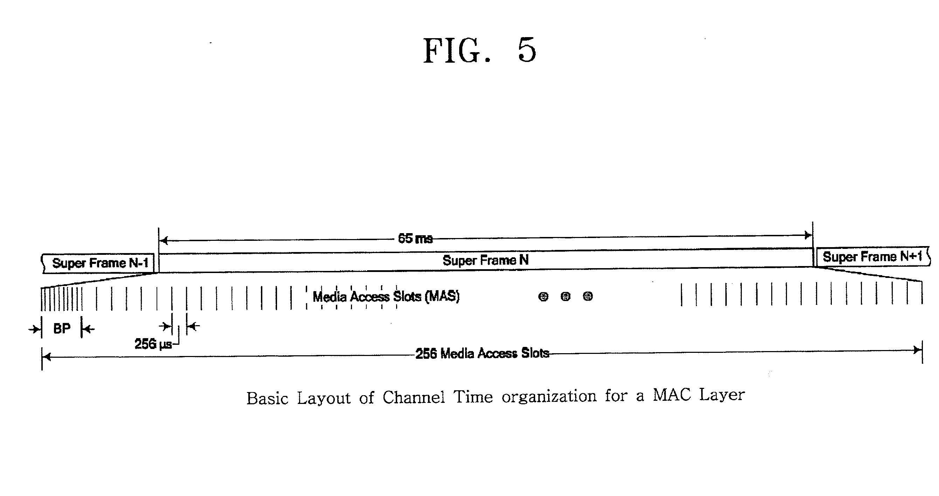

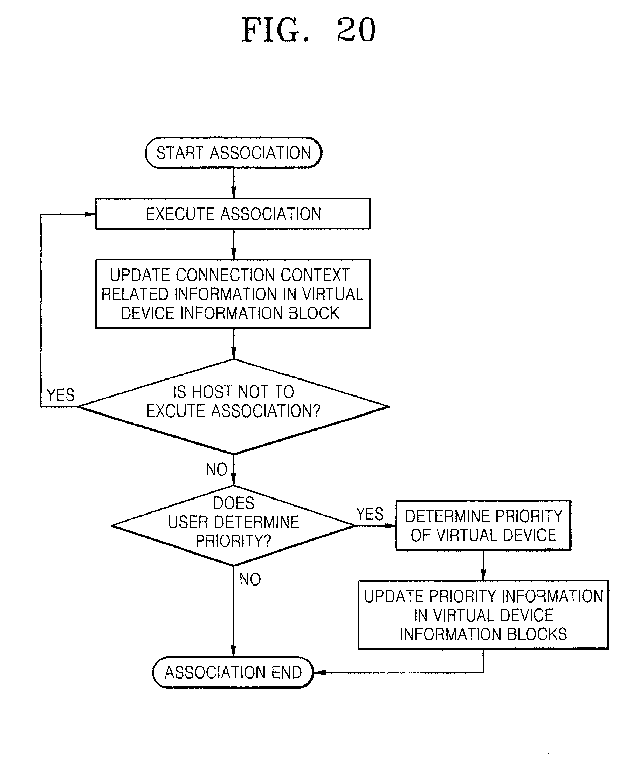

Figure 1 is a block diagram of a system 300 to connect a single device 200 and a plurality of hosts 100a, 100b, ..., 100n using a wireless universal serial bus (USB) according to an embodiment of the present invention. Figure 2 is a flowchart illustrating a method of connecting a single device 200 and a plurality of hosts 100a, 100b, ..., 100n using a wireless USB according to an embodiment of the present invention. Figures 3A - 3C are block diagrams illustrating hosts 100 which can be employed as embodiments of the plurality of hosts 100a, 100b, ..., 100n in the system 300 illustrated in Figure 1, and Figures 4A - 4C are block diagrams illustrating the device 200 which can be employed in the system 300 illustrated in Figure 1, according to various embodiments of the present invention. Figures 5-19 are diagrams illustrating operations of exchanging data between the single device 200 and the plurality of hosts 100 in the system and method illustrated in Figures 1 and 2. Figures 20 - 21 are flowcharts illustrating exemplary procedures of the system and method illustrated in Figures 1 and 2. Throughout the drawings, well-known terms, components, and data (signal) illustrated in the drawings are not described for convenience of descriptions.

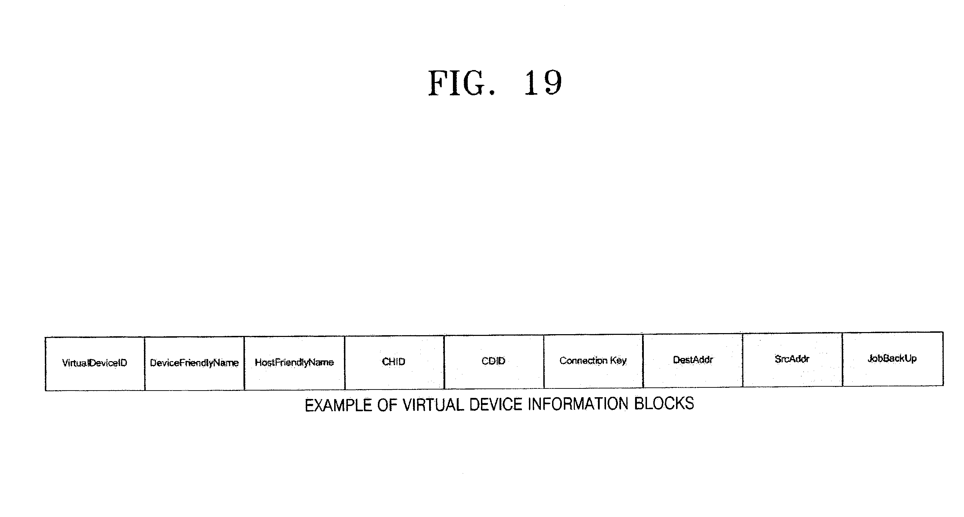

Referring to Figure 1, the system 300 connects the single device 200 and the plurality of hosts 100a, 100b, ..., 100n. A plurality of virtual devices 211a, 211b, ..., 211n, which correspond to the plurality of hosts 100a, 100b, ..., 100n, are set and stored in the single device 200. The plurality of virtual devices 211a, 211b, ..., 211n are implemented by a device information block (refer to Figure 19) that stores association information in which a connection context for authentication are exchanged between the plurality hosts 100a, 100b, ..., 100n and the single device 200.

Referring to Figures 3A - 3C, and 4A - 4C, each of the plurality hosts 100 (each of the plurality of hosts 100 may correspond to the plurality of hosts 100a, 100b, ..., 100n of Figure 1) included in system 300 includes a host module 110 that produces and sends a signal for indicating whether the host 100 has a job, such as printing, to be executed by the single device 200. The single device 200 includes a device module 210 (Figures 4A - 4C) that identifies which host 100 has a job to be executed by the single device 200 by checking each signal sent from the hosts 100. The device module 210 may include either a non-volatile memory (not shown) or a volatile memory (not shown) to store the plurality of virtual devices 211 a, 211b, ..., 211n. All of the plurality of hosts 100 can continuously connect with the single device 200 by means of the plurality of virtual devices 211a, 211b, ..., 211n, this procedure being described later.

The host 100 may include the host module 110 as described above, as well as a wireless USB (WUSB) host controller 120 to generate a control signal according to the signal of the host module 110, an RF/baseband ultra wideband (UWB) physical layer (PHY) 130 to generate data as a physical layer, and an antenna 140 to output the generated data, as illustrated, for example, in Figure 3A. Alternatively, the host 100 may include the host module 110 as described above, a WUSB host controller module 122, and an antenna 140, as illustrated, for example, in Figure 3B; or include the host module 110 as described above, a wired USB host controller 124, a host wire adaptor (HWA) 134 to generate HWA data, and an antenna 140 to transmit the generated HWA data, as illustrated, for example, in Figure 3C. The WUSB host controller module 122 in Figure 3B can be formed by combining the WUSB host controller 120 with the RF/baseband UWB PHY 130, as illustrated, for example, in Figure 3A.

The single device 200, such as a wireless printer, may include the device module 210 as described above, a WUSB device controller 220, an RF/baseband UWB PHY 230, and an antenna 240, as illustrated, for example, in Figure 4A. Alternatively, the single device 200 may include the device module 210, a WUSB device control module 222, and an antenna 240, as illustrated, for example, in Figure 4b; or include the device module 210, a wired USB device controller 224, a device wire adaptor (DWA) 234, and an antenna 240, as illustrated, for example, in Figure 4C. The WUSB device controller module 222 in Figure 4B can be formed by combining the WUSB device controller 220 with the RF/baseband UWB PHY 230, as illustrated, for example, in Figure 4A.

In Figure 1, the plurality of hosts 100a, 100b, ..., 100n may correspond to any of the hosts 100, illustrated in Figures 3A - 3C, and the single device 200 may correspond to one of the single devices 200, illustrated in Figures 4A - 4C.

The host module 110 in Figures 3A-C includes a non-volatile memory (not shown) to store code to be able to the WUSB host controller 120, or the WUSB host controller module, or the WUSB host controller 124 and a connection context required for a wireless USB connection, and may also include a volatile memory (not shown) for code operation. The device module 210 of Figures 4A-C includes a non-volatile memory (not shown) that stores code to be able to control the WUSB device controller 220, or the wired USB device controller 224, or the WUSB device controller module 222 and connection context required for a wireless USB connection, and a volatile memory (not shown) for code operation.

Packets sent from the antenna 140 (Figures 3A - 3C) and 240 (Figures 4A - 4C) are formed of well known media access control layers which may include beacons and distributed reservation protocol. Of course, other wireless schemes may be used according to design preference.

Referring to Figure 2, the method of connecting the single device 200 and the plurality of hosts 100a, 100b, ..., 100n includes operations of: setting and storing the plurality of virtual devices 211 a, 211 b, ..., 211 n in the single device 200 (operation S100), connecting each of the plurality of virtual devices 211a, 211b, ..., 211n to the plurality of hosts 100a, 100b, ..., 100n according to a beacon period (or beacon interval) (operation S110), and using the single device 200 by one of the plurality of hosts 100a, 100b, ..., 100n while the plurality of virtual devices 211a, 211b, ..., 211n are connected with the plurality of hosts 100a, 100b, ..., 100n.

Referring to the attached drawings, the exemplary procedures of a method and system of connecting the single device 200 and the plurality of hosts 100 using the USB will now be described using similar technical terms which have been defined in the wireless USB topology specification. In other words, for clarifying the explanation of the present invention, the terms used in the present description (and also in the drawings) are analogous to the terms defined in the USB topology specification.

A method according to the present invention can be conceivably divided into two procedures, which are an association procedure in which connection context for authentication is exchanged between the plurality of hosts 100 and the single device 200, and another procedure in which the single device 200 and the plurality of hosts 100 are connected using a wireless USB similar to conventional wired USB.

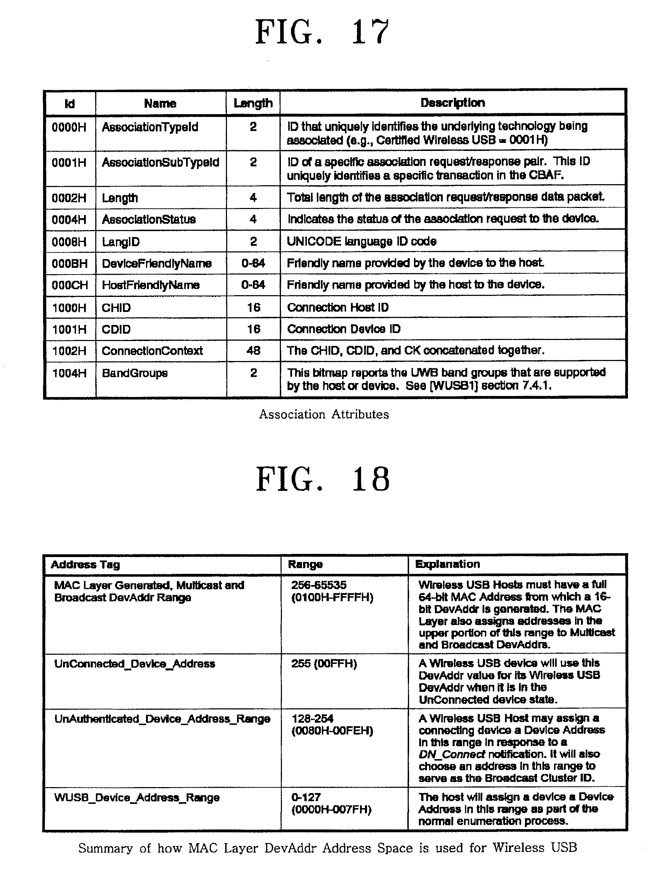

In the association procedure, which is the first procedure, the single device 200 exchanges information such as a connection device ID (CDID), a connection host ID (CHID), CK (check), DeviceFriendlyName, HostFriendlyName, (referring to Figure 17 illustrating the virtual device information block), etc., with the hosts 100 through various conventional association models. The information may be different depending on the conventional association model. In addition, the information may be stored in a plurality of virtual device information blocks as illustrated, for example, in Figure 19, together with additional information including priority information and an ID. The virtual device information blocks of Figure 19 are stored in the non-volatile memory or the volatile memory of the single device 200. A user executes the association procedure between the single device 200 and a desired host 100 and stores the information in the plurality of virtual devices (211a, 211b,...,211n) to correspond to the respective hosts 100. Alternatively, if necessary, the user sets the virtual device information blocks by giving priorities to the virtual device information blocks included in the single device 200 as the priority information. According to the above association procedures, the virtual device information blocks are stored in the single device 200 through the association between the single device 200 and the respective hosts 100.

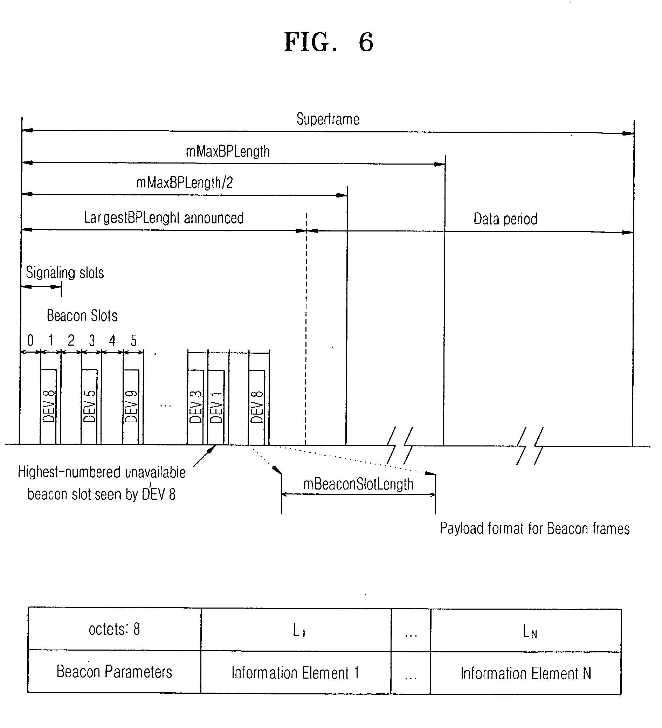

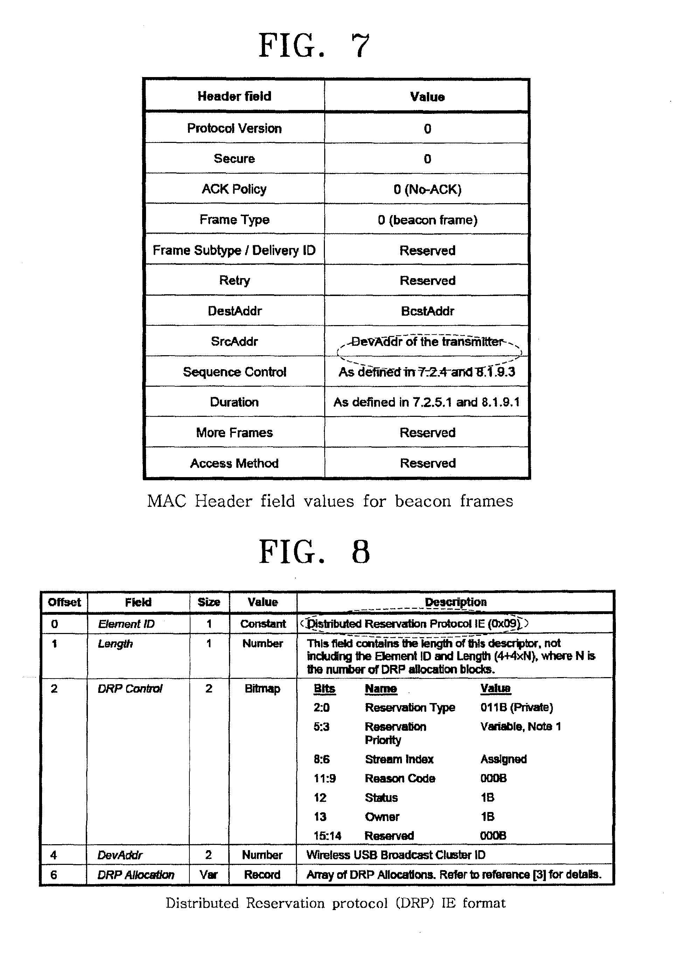

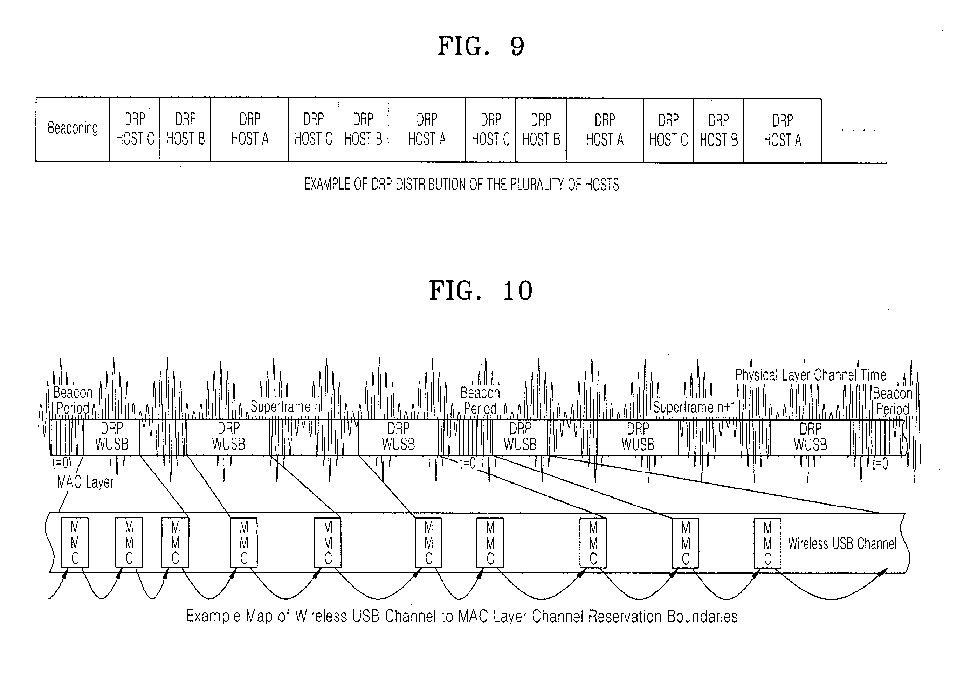

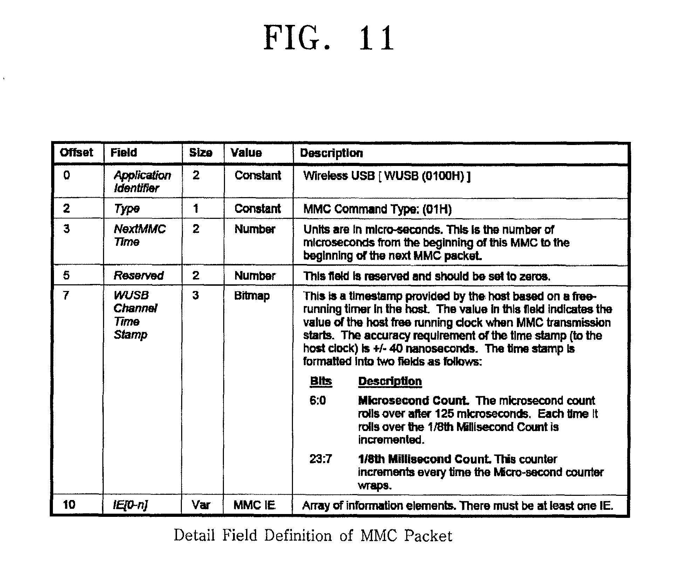

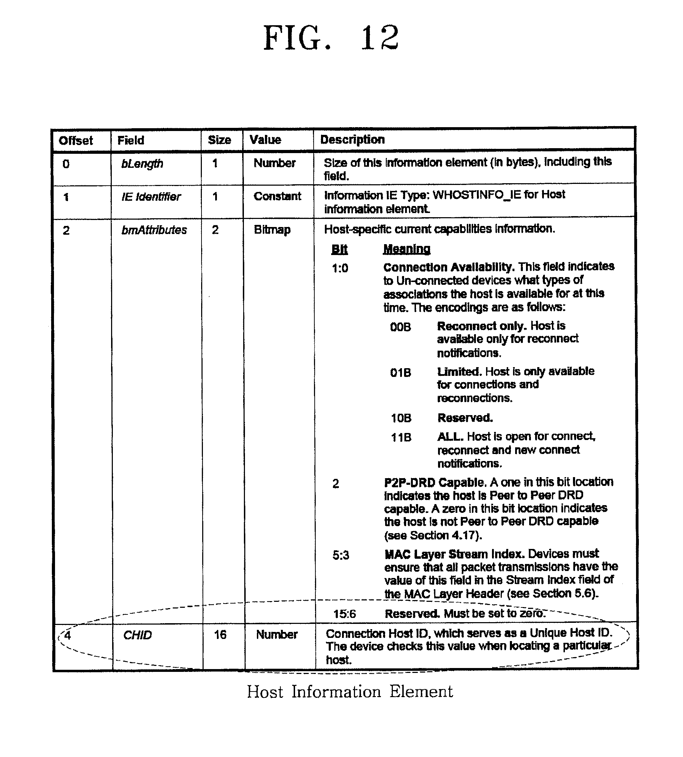

In the second procedure, the single device 200 finds a frame, for example, in which a FrameType of a MAC Header field (Referring to Figure 7 illustrating MAC header field values for beacon frames) is 0 and a DestAddr section is 0xFFFF (BcstAddr) by scanning a beacon period BP (referring to Figure 5 illustrating a basic layout of channel time organization for a MAC layer, and Figure 10 illustrating a map of wireless USB channel to MAC layer channel reservation boundaries), checks if a CHID field of a wireless USB host information IE (referring to Figure 12 illustrating a host information element) which is one of the information elements of a micro-scheduled management command (MMC) (referring to Figure 11 illustrating detail field definition of MMC packet) is the same CHID field that was registered through the first procedure, and the MMC is placed in a payload in a medium access slot (MAS) section of distributed reservation protocol (DRP) allocation information (referring to Figure 8 illustrating distributed reservation protocol (DRP) IE format, and Figure 9 illustrating an example of DRP distribution of the plurality of hosts 100) of which an element ID is set as DRP IE(0x09) and which is included in information elements (IEs) of a payload format (referring to Figure 6 illustrating an exemplary payload format for beacon frames). At the same time, a source address of the Mac Header field (referring to Figure 7) is added to the virtual device information block (referring to Figure 19) corresponding to the CHID field of the wireless USB host IE (information element). If the source address of a Mac Header field can not be added at this time, the source address of a Mac Header field is allowed to be registered at any time with regards to any MAC frame corresponding to the next CHID field.

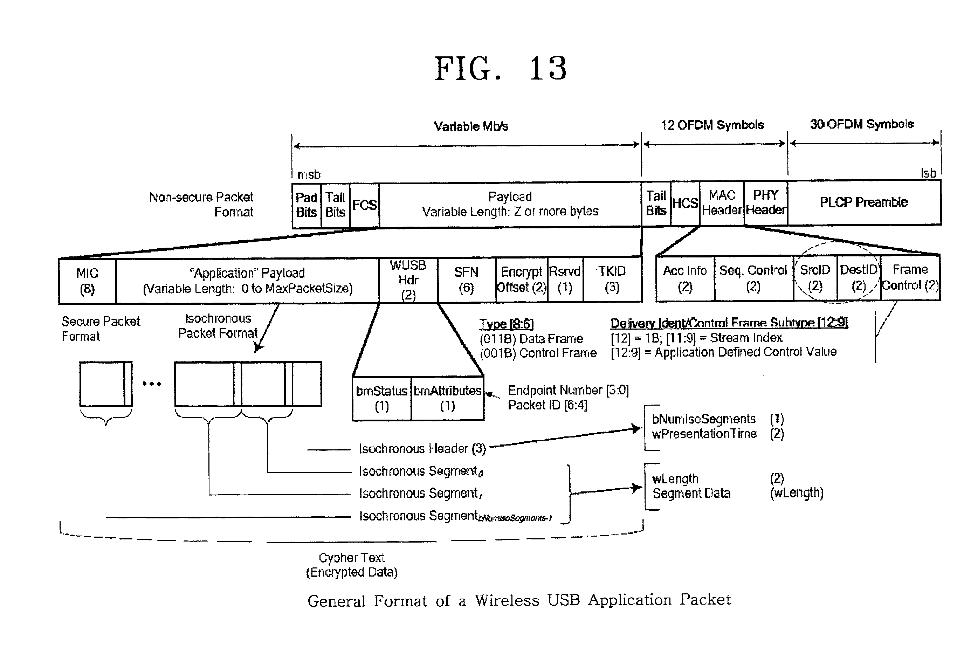

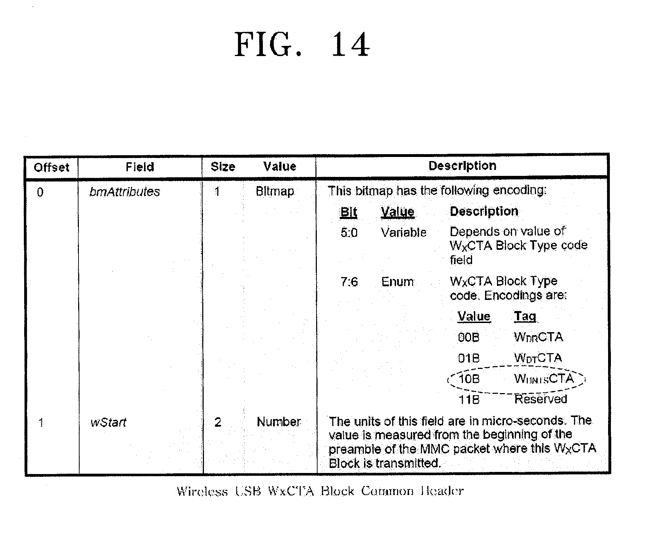

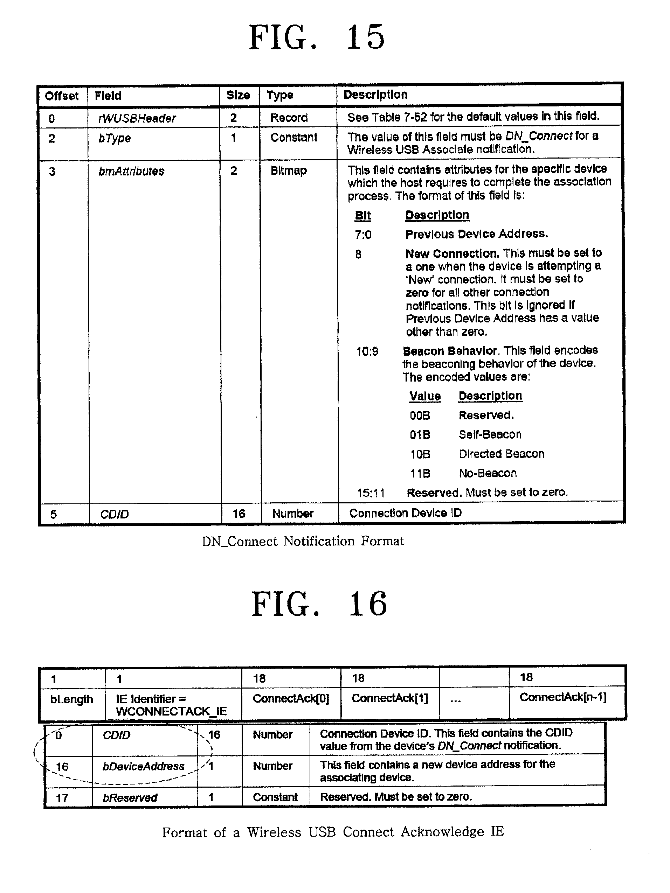

Afterwards, the single device 200 sends a DN_Connect request to the corresponding host 100 (referring to Figure 15 illustrating DN_Connect notification format) including a CDID field of the single device 200 in which a device address is set as UnConnected_Device_Address_Range during a time of WDNTSCTA (referring to Figure 14 illustrating a wireless USB WxCTA block common header, and Figure 13 illustrating a general format of a wireless USB Application packet), and the DN_Connect request to the corresponding host 100 is one of the MMC's information elements which has the same CHID field as the CHID field registered in the first procedure. Then, the host 100 assigns the device address in Unauthenticated_Device_Address_Range (referring to Figure 18 illustrating a summary of how MAC layer DevAddr Address Space is used for wires USB), and sends a requested CDID field and the device address through ConnectAcknowledge (referring to Figure 16 illustrating a format of a wireless USB connect acknowledge IE) of which a value of the IE identifier is WCONNECTACK_IE (0x81H). At this time, the single device 200 updates the CDID field and, if necessary, the device address in the corresponding virtual device information block. Then, after completing the authentication through a 4-way handshake and when the device address is assigned in the actual WUSB_Device_Address_Range, the single device 200 updates the address in DestAddr section of the virtual device information block, and thus the connection procedure is complete.

According to the above procedures, the single device 200 attempts to connect with the plurality of hosts 100a, 100b, ..., 100n and completes the operations related to all information of the virtual device information block (referring to Figure 19). Also, if necessary, the user can prioritize the virtual devices (211 a, 211b, ..., 211n) registered in the single device 200 and add information about the priorities to the virtual device information block.

The hosts 100a, 100b, ..., 100n can communicate with the plurality of virtual devices 211 a, 211b, ..., 211 n in a different time span according to a distributed reservation protocol, for example, as in WiMedia Mac. Using information such as a source address or a device address in the virtual device information block registered in the device through the above procedure, the single device 200, including the plurality of virtual devices 211a, 211b, ..., 211n, recognizes the virtual device information block of which the device address matches with a device address ofWxCTA of a micro-scheduled management command allocated by each of the hosts 100 as a real device. However, a source of the single device 200, which is shared by the plurality of hosts 100, may be used first by the host 100 that preempts the source. Alternatively, the source may be used sequentially by the hosts 100 accordingly to set priority by a user, and the host 100 with the next priority waits until the host 100 can take possession of the source according to a driver or application of the host 100, or inform the user that the single device 200 is connected with the host 100, but the host 100 cannot use the source. This operation relating to the use of the source could be different according to the actual driver or application.

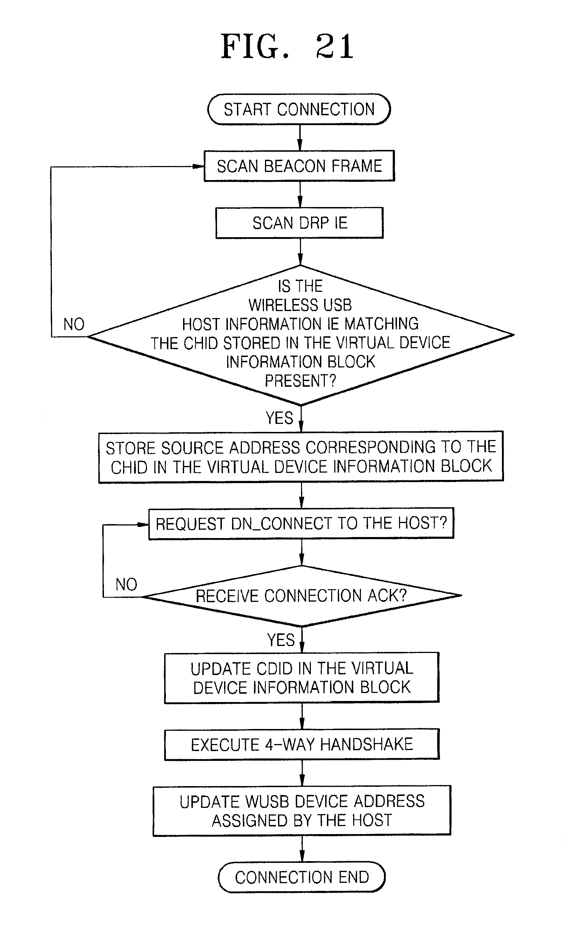

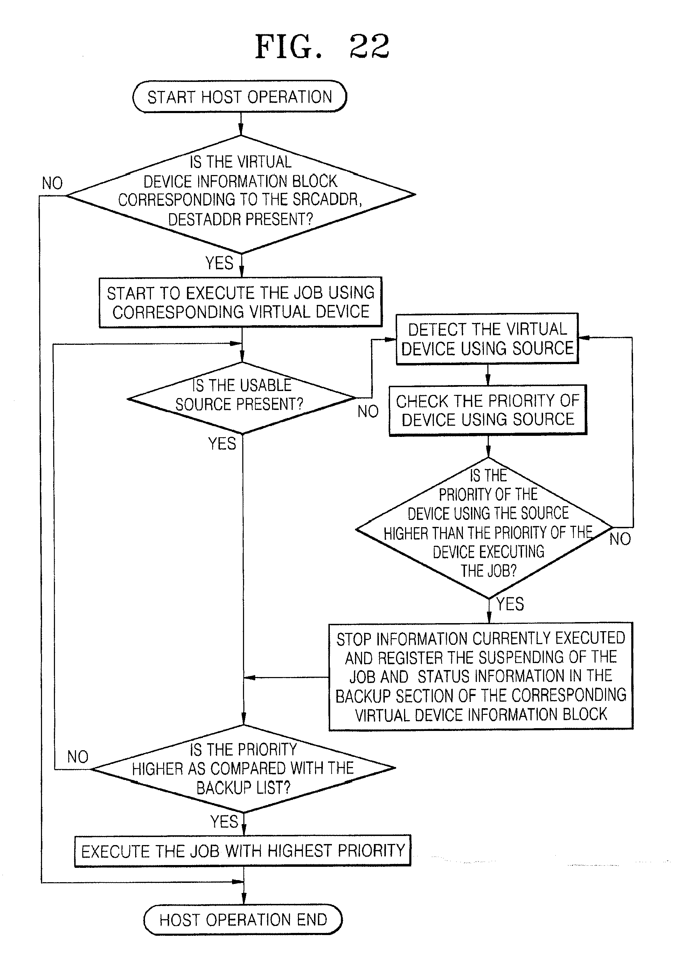

Figure 20 is a flowchart illustrating exemplary procedures of association and updating of the virtual device information block, and Figure 21 is a flowchart illustrating exemplary procedures of updating information and the virtual device information block according to a connection. Figure 22 is a flowchart illustrating exemplary procedures of executing a job according to priority.

For example, when it is assumed that there is a host A 100a (for example, source address value 0x1111) and a host B 100b (for example, source address value 0x2222) within a range of where the virtual devices 211 a, 211b, ..., 211 n of the single device 200 can communicate with the hosts A and B, 100a and 100b, two virtual device information blocks in which virtual device IDs are 1 and 2 are created in the single device 200 through the above procedures. Corresponding to the hosts A and B, respectively. Also, it is assumed, but not a requirement, that a user prioritizes the host A 100a over the host B 100b in order to complete the final virtual device information block.

It may be assumed that the host A 100a connects with the virtual device 211a of which the virtual device ID is 1, the host B 100b connects with the virtual device 211b of which the virtual device ID is 2 and all hosts A and B, 100a and 100b, remain in an idle state. For example, when the single device 200 is a printer, if a user executes a printing operation in the host A 100a, it may not be different from a conventional wireless USB operation from the view point of the virtual device ID 1. Moreover, the host B 100b still remains connected with the virtual device ID 2 and remains in the idle state. Therefore, the host A 100a performs the printing job while being connected with the virtual device ID 1 and returns to the idle state. If the host A 100a requests a job through the virtual device ID 1 while the host B 100b is performing a job through the virtual device ID 2, the single device 200 stores information about the job that is being performed by the virtual device ID 2 in a JobBackup section of the virtual device information block (referring to Figure 19), and performs the job requested by the host A 100a. Then, the single device 200 resumes the executing of the job of the virtual device ID 2 and completes the job, and then indicates the completion of the job to the JobBackup section of the virtual device information block. The above procedure may be modified according to design preference and may also utilize more than two hosts, so that alternative job control schemes may be incorporated to enable smooth multiple host-to-single device operation.

The present invention can also be embodied as computer-readable codes as a program on a computer-readable recording medium. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present invention can be easily construed by programmers skilled in the art to which the present invention pertains.

According to the present invention, a wireless USB is able to employ a topology that is almost the same as the topology of a wired USB, thereby substantially utilizing the advantages of wireless techniques.

As described above, a method and system to connect a single device and a plurality of hosts according to the present invention set and store a plurality of virtual devices in the single device and maintain a connection between the plurality of devices and the plurality of hosts, and thus improve the efficiency and convenience of use of the single device.

Although a few embodiments of the present invention have been shown and described, it will be appreciated by those skilled in the art that changes may be made in these embodiments without departing from the scope of the invention as defined in the appended claims.

## Claims

1. A method of connecting between a single device (200) and a plurality of hosts (100a, 100b, ... 100n) using a wireless universal serial bus (WUSB), the method comprising:
setting and storing a plurality of virtual devices (211a, 211b, ... 211n) in the single device (200); and
establishing a connection between the plurality of virtual devices (211a, 211b, ... 211n) and the plurality of hosts (100a, 100b, 100n).

2. The method of claim 1, further comprising:
using one of the plurality of hosts (100a, 100b, ... 100n) as the single device (200) to connect the plurality of virtual devices (211 a, 211 b, ... 211 n) to the corresponding hosts (100a, 100b, ... 100n).

3. The method of claim 1 or 2, further comprising:
forming and storing virtual device information blocks corresponding to the respective virtual devices (211a, 211b, ... 211n) in a storage portion of the single device (200).

4. The method of claim 3, wherein each of the virtual device information blocks comprises association information including a connection host ID (CHID) and a connection device ID (CDID).

5. The method of claim 4, wherein the association information comprises priority information.

6. The method of claim 4 or 5, wherein the association information is provided by at least one of the plurality of hosts (100a, 100b, ... 100n) according to a defined association method, or by a user establishing another connection between the single device (200) and an intended one of the hosts in order to obtain the association information.

7. The method of claim 6, wherein the establishing of the connection comprises checking a frame type of a media access control (MAC) header field by scanning a detectable beacon period using the single device (200) to establish the connection.

8. The method of any one of claims 3 to 7, wherein the single device (200) and the plurality of hosts (100a, 100b, ... 100n) recognize each of the plurality of virtual devices (211 a, 211b, ... 211 n) as an individual real device.

9. The method of any one of claim 3 to 8, wherein a source of the single device (200) that is shared by the plurality of hosts (100a, 100b, ... 100n) is used by a host that preempts the source.

10. The method of any one of claims 3 to 8, wherein a source of the single device (200) that is shared by the plurality of hosts (100a, 100b, ... 100n) is used sequentially by the plurality of hosts (100a, 100b, ... 100n) according to a priority set by a user, and one of the hosts with a next priority waits while connecting with a corresponding one of the virtual devices (211a, 211b, ... 211n) until the one of the hosts takes possession of the source.

11. A system for connecting a single device (200) to a plurality of hosts (100a, 100b, ... 100n) using a wireless universal serial bus (WUSB), the system comprising:
the single device (200), which includes a plurality of virtual devices (211a, 211b, ... 211n) that are set in the single device (200) and correspond to the plurality of hosts (100a, 100b, ... 100n);
wherein the plurality of virtual devices (211 a, 211b, ... 211 n) are implemented by device information blocks that store association information obtained through an association procedure in which connection context for authentication is exchanged between the single device (200) and the plurality of hosts (100a, 100b, ... 100n).

12. The system of claim 11, wherein the device information blocks are stored in a storage portion of the single device (200).

13. The system of claim 11 or 12, wherein each of the device information blocks comprise ID information including a connection host ID (CHID), and a connection device ID (CDID) and priority information.

14. The system of any one of claims 11 to 13, wherein the association information is provided by at least one of the plurality of hosts (100a, 100b, ... 100n) according to a defined association method, or a user establishing another connection between the single device (200) and an intended one of the hosts to obtain the association information.

15. The system of any one of claims 11 to 14, wherein the plurality of virtual devices (211a, 211b, ... 211n) are recognized by corresponding ones of the hosts (100a, 100b, ... 100n) according to a beacon period during which the single device (200) and the plurality of hosts (100a, 100b, ... 100n) communicate with each other.

16. A system for connecting a single device (200) and a plurality of hosts (100a, 100b, ... 100n) using a wireless universal serial bus (WUSB), the system comprising:
the single device (200) which includes a plurality of virtual devices (211a, 211b ... 211 n) respectively having device information blocks such that each one of the virtual devices (211a, 211b, ... 211n) is individually connected to a corresponding one of the hosts (100a, 100b, ... 100n) according to the device information blocks.

17. The system of claim 16, wherein the device information blocks are different from each other.

18. The system of claim 16 or 17, wherein the device information blocks comprise a connection host ID (CHID) and a connection device ID (CDID).

19. The system of any one of claims 16 to 18, wherein the device information blocks comprise priority information.

20. A system to connect a single device (200) and a plurality of hosts (100a, 100b, ... 100n) using a wireless universal serial bus (WUSB), the system comprising:
the single device (200) which includes a plurality of virtual devices (211a, 211b, ... 211n) respectively having device information blocks such that the single device (200) is connected to the plurality of hosts (100a, 100b, ... 100n) by selectively connecting each of the virtual devices (211a, 211b, ... 211n) to a corresponding one of the plurality of hosts (100a, 100b, ... 100n) according to one of a state and a job of the corresponding one of the plurality of hosts (100a, 100b, ... 100n).

21. The system of claim 20, wherein the state comprises an idle state, and the job comprises a printing job.

22. The system of claim 20 or 21, wherein the single device (200) comprises a device module (210) having the plurality of virtual devices (211a, 211b, ... 211n), a WUSB device controller module (222) configured to generate data according to the device information blocks, and an antenna (240) configured to transmit the generated data.

23. The system of claim 22, wherein the WUSB device controller module (222) comprises an RF/baseband UWB physical layer unit to generate a signal having a physical layer according to the generated data, and the antenna (240) transmits the generated signal.

24. The system of claim 20 or 21, wherein the single device (200) comprises a device module (210) having the plurality of virtual devices (211a, 211b, ... 211n), a wired USB device controller module (224) configured to generate data according to the device information blocks, a device wired adaptor (234) configured to generate a wireless signal, and an antenna (240) configured to transmit the generated wireless signal.

25. A computer readable recording medium having stored thereon a computer program for carrying out the method of any one of claims 1 to 10.
